**Europäisches Patentamt**

**European Patent Office**

**Office européen des brevets**

(19)

(11) Veröffentlichungsnummer : **0 469 318 B1**

(12)

# EUROPÄISCHE PATENTSCHRIFT

(45) Veröffentlichungstag der Patentschrift :
**13.04.94 Patentblatt 94/15**

(51) Int. Cl.$^5$ : **B23B 31/00, B23Q 15/12**

(21) Anmeldenummer : **91111000.5**

(22) Anmeldetag : **03.07.91**

(54) **Spannvorrichtung für Werkzeugmaschine.**

(30) Priorität : **03.08.90 DE 4024703**

(43) Veröffentlichungstag der Anmeldung :
**05.02.92 Patentblatt 92/06**

(45) Bekanntmachung des Hinweises auf die
Patenterteilung :
**13.04.94 Patentblatt 94/15**

(84) Benannte Vertragsstaaten :
**CH DE FR GB IT LI**

(56) Entgegenhaltungen :
**EP-A- 0 018 465**
**EP-B- 0 099 992**
**DE-A- 3 022 434**
**DE-A- 3 610 750**
**US-A- 4 307 325**

(73) Patentinhaber : **ROBERT BOSCH GMBH**
**Postfach 30 02 20**
**D-70442 Stuttgart (DE)**

(72) Erfinder : **Hornung, Friedrich, Dipl.-Ing.**
**Am Ochsenwald 10 A**
**W-7000 Stuttgart 80 (DE)**
Erfinder : **Wannke, Dietmar, Dipl.-Ing.**
**Mettnaustrasse 32**
**W-7410 Reutlingen 24 (DE)**
Erfinder : **Horvath, Tibor, Dipl.-Ing.**
**Vogelherdstrasse 31**
**CH-4500 Solothurn (CH)**

## Beschreibung

Die Erfindung geht aus von einer Spannvorrichtung für eine Werkzeugmaschine, insbesondere ein Elektrohandwerkzeug, nach der Gattung des Hauptanspruchs. Aus der EP-PS 0 099 992 ist schon eine Spannvorrichtung für eine Werkzeugmaschine bekannt, bei der sowohl die Drehzahl der Abtriebswelle als auch der Schaftdurchmesser des eingespannten Werkzeugs gemessen wird. Diese Informationen werden einer Drehzahlregeleinrichtung zugeführt und damit die Drehzahl des Motors eingestellt. Die zu messenden Parameter werden von einem Signalgeber erfaßt, der mit den Spannbacken eines Bohrfutters verbunden ist und sich in Abhängigkeit vom Durchmesser des einzuspannenden Werkzeugschaftes axial in Richtung der Rotationsachse verschieben läßt. Während der Rotation des Spannfutters gibt der Signalgeber seine Informationen an einen Signalaufnehmer ab, der unterhalb des Signalgebers am Gehäuse der Werkzeugmaschine positioniert ist.

Da der Signalgeber in Abhängigkeit vom Öffnungswinkel des Spannfutters seinen Abstand zum Signalaufnehmer ändert, ist die Amplitude des im Signalaufnehmer induzierten Spannungsimpulses direkt proportional zum Öffnungswinkel der Spannbacken. Aus der Frequenz des Signals läßt sich die Drehzahl des Spannfutters ermitteln, so daß aus der Spannungsamplitude und der Frequenz des am Signalaufnehmer abgegriffenen Spannungssignals der Werkzeugschaftdurchmesser und die Drehzahl ermittelt werden kann.

Es hat sich gezeigt, daß die Signalerzeugung großen Störungen unterworfen ist, wenn sich der Signalgeber axial zur Abtriebswelle bewegt und damit ständig der Abstand zum Signalaufnehmer verändert wird. Dieses ist insbesondere dann der Fall, wenn eine Hanbohrmaschine in Schlagbetrieb betrieben wird. Im Schlagbetrieb bewegt sich die Spannvorrichtung mit dem Signalaufnehmer in der axialen Richtung, so daß das gemessene Signal mit einem Jitter überlagert ist.

Weiterhin ist ungünstig, das bei einem einzuspannenden Werkzeug mit einem relativ kleinen Durchmesser der Abstand zwischen dem Signalgeber und dem Signalaufnehmer relativ groß wird. Durch den großen Abstand ist die Amplitude des Nutzsignals relativ klein und dadurch schwer auswertbar, zumal das Nutzsignal von nicht vermeidbaren Störimpulsen überlagert ist. Dieses führt zur ungenauen Erfassung sowohl der Drehzahl als auch des Werkzeugdurchmessers, so daß die Drehzahlregelung entsprechend ungenau ist.

## Vorteile der Erfindung

Die erfindungsgemäße Spannvorrichtung mit den kennzeichnenden Merkmalen des Hauptanspruchs hat demgegenüber den Vorteil, daß der Abstand zwischen dem Signalgeber und dem Signalaufnehmer konstant ist, unabhängig davon, ob der Werkzeugdurchmesser groß oder klein ist bzw. ob die Werkzeugmaschine im Rotations- oder Schlagbetrieb arbeitet. Dadurch ergibt sich ein Nutzsignal mit konstanter Amplitude, das wesentlich größer ist als die auftretenden Störsignale.

Bei der Auswertung des gemessenen Signals ist besonders vorteilhaft, daß weiterhin aus der Periodendauer die Drehzahl der Spannvorrichtung und aus dem Tastverhältnis der Durchmesser des eingespannten Werkzeuges ermittelbar ist. Diese Informationen stehen am Ausgang des Signalaufnehmers getrennt zur Verfügung und sind unabhängig voneinander auswertbar.

Durch die in den Unteransprüchen aufgeführten Maßnahmen sind vorteilhafte Weiterbildungen der im Hauptanspruch angegebenen Spannvorrichtung möglich. Durch eine nur teilweise Anordnung der Segmente am Umfang des Signalgebers ergibt sich besonders vorteilhaft eine einfache Bestimmung der Drehrichtung.

Bei einer Vervielfachung der Segmente ergeben sich Vorteile für eine schnelle Erfassung der Betriebsparameter. Besonders vorteilhaft ist weiter, daß die Segmente des Signalgebers dreieck- und/oder trapezförmig ausgebildet sind. Verschiebt sich der Signalgeber in Abhängigkeit vom Öffnungswinkel der Spannvorrichtung relativ zur Position des Signalaufnehmers, dann ändert sich aufgrund der Dreieckstruktur das Tastverhältnis der gemessenen Impulsfolge.

Besonders vorteilhaft ist, wenn jeweils eine Seite der dreieck- und/oder trapezförmigen Segmente achsparallel zur Rotationsachse angeordnet ist. Durch die achsparallele Lage wird unabhängig vom Öffnungswinkel der Einspannvorrichtung die Messung der Drehzahl der Abtriebswelle besonders einfach.

Besonders vorteilhaft ist, daß der Signalgeber mehrere über den Umfang verteilte Segmente mit alternierend wechselnden Eigenschaften aufweist, weil dadurch eine sich wiederholende Impulsfolge entsteht, deren steigende und fallende Flanken besonders einfach auswertbar sind.

Eine besonders einfache Ausgestaltung der Erfindung besteht darin, daß die Segmente des Signalgebers beispielsweise Dauermagnete aufweisen, deren Nord- und Südpole in abwechselnder Reihenfolge wenigstens teilweise am Umfang angeordnet sind. Die Signale der Magnetsegmente werden in vorteilhafter Weise beispielsweise mit einem einfachen Hallsensor erfaßt, der bei jedem Wechsel der magnetischen Polarität ein elektrisches Spannungssignal abgibt.

Weitere Vorteile ergeben sich, wenn der Signalgeber anstelle von Magneten Farbmarkierungen mit unterschiedlicher Intensität aufweist, die mit einem einfachen lichtoptischen Sensor erfaßt werden können. Lichtoptische Sensoren haben den Vorteil, daß sie unabhängig von elektrischen Störfeldern arbeiten und dadurch sehr zuverlässige Meßsignale liefern.

Eine besonders vorteilhafte Ausführung eines lichtoptischen Sensors ist durch eine Reflexionslichtschranke gegeben, die recht preiswert erhältlich ist.

Eine vorteilhafte Lösung ist auch darin zu sehen, daß zur Übertragung der Signale Lichtleiter verwendbar sind, da diese wegen ihrer geringen Abmessungen größere gestalterische Freiheiten für die Anordnung des Signalaufnehmers ermöglichen.

Zur Messung der Drehrichtung der Welle ergibt sich eine besonders vorteilhafte Lösung, wenn unterschiedlich große Segemnte verwendet werden. Aus der Ablauffolge der sich drehenden Welle ergibt sich dann je nach dem Drehsinn eine unterschiedliche Impulssequenz, aus der die Drehrichtung der Welle leicht bestimmbar ist. Dadurch lassen sich mit dem gleichen Signalaufnehmer insgesamt drei unterschiedliche Parameter des Elektrowerkzeuges erfassen.

Um auch im Schlagbohrbetrieb ein störfreies Meßsignal zu erhalten, ist die Abstimmung der Schlageinrichtung auf die Anordnung der Segmente des Signalgebers eine günstige Konstruktionslösung.

Eine besonders vorteilhafte Lösung ergibt sich, wenn die Öffnungsweite der Spannbacken bereits vor dem Einsetzen des Schlagbetriebes gemessen und abgespeichert wird, da zu diesem Zeitpunkt noch keine Störungen auftreten können.

Weitere Vorteile der Erfindung sind der Beschreibung entnehmbar.

Zeichnung

Ein Ausführungsbeispiel der Erfindung ist in der Zeichnung dargestellt und in der nachfolgenden Beschreibung näher erläutert. Es zeigen Figur 1 einen Schnitt durch die Einspannvorrichtung, Figur 2 ein erstes Ausführungsbeispiel, Figur 3 ein Impulsdiagramm, Figur 4 ein Blockschaltbild, Figur 5 eine Rastenscheibe einer Schlagbohreinrichtung, Figur 6 ein erstes Blockschaltbild für die Drehrichtungsbestimmung, Figur 7 ein zweites Ausführungsbeispiel, Figur 8a,b je ein Impulsdiagramm und Figur 9 ein zweites Blockschaltbild für die Drehrichtungserkennung.

Beschreibung der Ausführungsbeispiele

Bei Werkzeugmaschinen hängt die Bearbeitungsqualität eines Werkstückes im wesentlichen von der gewählten Drehzahl des Werkzeuges, beispielsweise eines Bohrers, ab. Bei einer zu großen Drehzahl verschleißt der Bohrer sehr schnell, während bei einer zu niedrigen Drehzahl der Arbeitsfortschritt zu gering ist. Um zu jedem Bohrerdurchmesser die richtige Drehzahl der Werkzeugmaschine automatisch vorgeben zu können, ist es daher erforderlich, einerseits die Abtriebsdrehzahl im Bereich der Spannvorrichtung zu messen und andererseits den Öffnungswinkel der Spannvorrichtung zu erfassen, der ein Meß für das eingespannte Werkzeug ist. Diese beiden Informationen werden vom Signalaufnehmer erfaßt und der Drehzahlregelung für den Elektromotor zugeführt, die den Elektromotor auf die entsprechende optimale Drehzahl regelt. Bei Werkzeugmaschinen mit Schaltgetriebe wird in vorteilhafter Weise durch den Abgriff der Drehzahl an der Abtriebswelle die Gangstellung des Schaltgetriebes bereits berücksichtigt. Für bestimmte Anwendungen, beispielsweise beim Schrauben oder Gewindeschneiden, ist auch die Erfassung der Drehrichtung erforderlich. Durch die spezielle Anordnung der Segmente wird der Drehrichtungssinn als dritter Parameter vom gleichen Signalaufnehmer erfaßt.

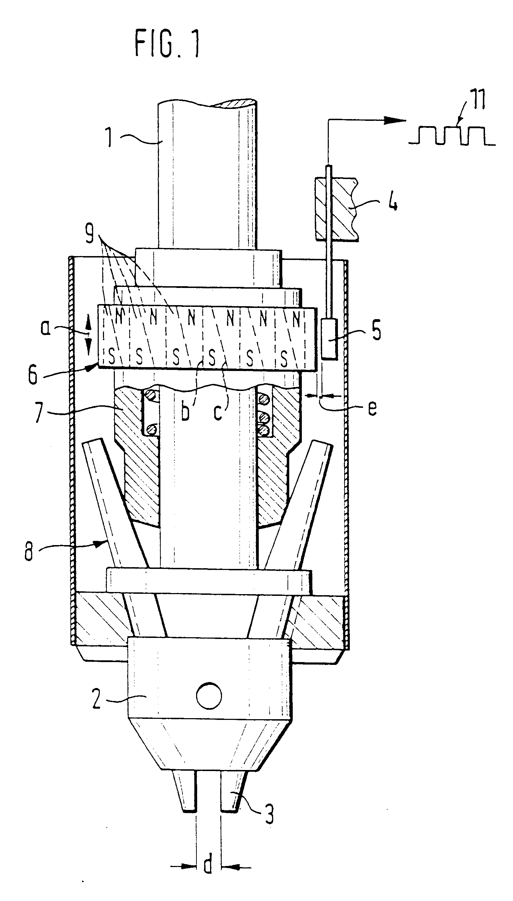

In Figur 1 ist eine erfindungsgemäße Spannvorrichtung dargestellt. Ein Spannfutter, das beispielsweise aus der EP-PS 0 099 992 bekannt ist, weist die Spannbacken 3 auf, die über einen Einstellring 7 keilförmig verschiebbar sind und am Ausgang der Spannvorrichtung 2 den Öffnungswinkel d bilden. Mit dem Einstellring 7 ist ein Signalgeber 6 verbunden, dessen Position in bezug auf die Abtriebswelle 1 axial in Richtung a verschiebbar ist. Am Umfang des Signalgebers 6 sind trapezförmige Segmente 9 angeordnet, bei denen jeweils eine Längsseite achsparallel zur Abtriebswelle 1 angeordnet ist. Im Ausführungsbeispiel der Figur 1 weisen die Segmente 9 Magnete auf, deren Polarität abwechselnd Süd, Nord, Süd usw. angeordnet ist. Der Signalgeber 6 ist mit der Spannvorrichtung 8 und der Abtriebswelle 1 verbunden und dreht sich bei Betrieb der Werkzeugmaschine mit der gleichen Drehzahl wie die Abtriebswelle 1.

Ein mit dem Gehäuse 4 der Werkzeugmaschine fest verbundener Signalaufnehmer 5 ist am Umfang des Signalgebers 6 derart angeordnet, daß er zum Signalgeber 6 einen festen Abstand e bildet. Der Signalaufnehmer 5 ist feststehend angeordnet und erzeugt aufgrund der sich vorbeidrehenden Segmente 9 des Signalgebers 6 elektrische Impulse 11, die der Drehzahlregeleinrichtung zuführbar sind.

Als Signalaufnehmer sind per se bekannte induktive Aufnehmer oder Hall-Sensoren verwendbar. In den Ausführungsbeispielen wurde als Hall-Sensor der Typ UGN-3130 der Firma Sprague verwendet, der in Abhängigkeit vom Nord- bzw. Südpol des Magneten ein '1' - bzw. ein '0'-Signal abgibt.

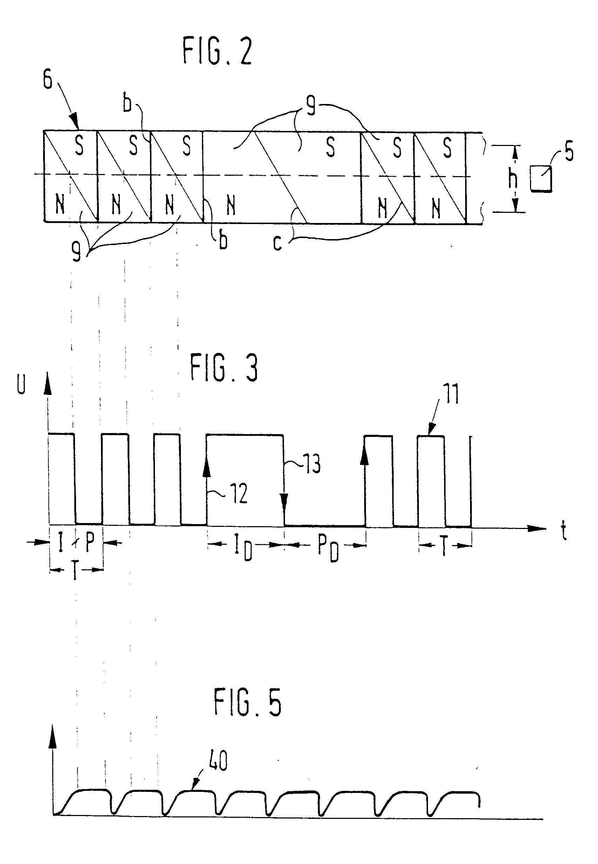

In Figur 2 ist in Abwicklung der Umfang des Signalgebers 6 dargestellt. Er weist dreieck- oder trapezförmige Segmente 9 auf, von denen jeweils eine Seite b parallel zur Drehachse ausgebildet ist. Die der Seite b gegenüberliegende Trapezseite c ist schräg zur Drehachse des abgewickelten Signalgebers 6 ausgebildet. Die schrägen Seiten c sind parallel zueinander angeordnet. Die Segmente 9 weisen unterschiedliche Eigenschaften auf, die detektierbar sind. Jeweils ein nachfolgendes Segment 9 unterscheidet sich von seinem Vorgänger und seinem Nachfolger. Die zu unterscheidenden Eigenschaften können magnetisch, förmlich, elektrisch, optisch, farblich usw. sein. Der Signalgeber 6 weist eine wirksame Höhe h auf, um die der Signalgeber 6 in Abhängigkeit von der Öffnungsweite d der Spannbacken 3 parall zur Abtriebswelle 1 verschiebbar ist. Bei Rotation des Signalgebers 6 erkennt der Signalaufnehmer 5 je nach seiner Position unterschiedliche Anteile der Segmente 9, so daß gemäß der Figur 3 eine entsprechende Impulsfolge 11 entsteht, die unterschiedliche Impuls- und Pausenzeiten $I_D$, $P_D$ aufweist. Die Pulse weisen positive Flanken 12 und negative Flanken 13 auf.

In Figur 4 ist ein Blockschaltbild für die Regelung der Werkzeugmaschine dargestellt. Ein Mikrocomputer 22 ist mit einer Dateneingabe 24 und dem Signalaufnehmer 5 verbunden. Der Mikrokomputer 22 weist einen Speicher 23 auf, in dem die empfangenen Daten sowie ein Steuerprogramm für den Mikrocomputer gespeichert sind. Der Ausgang des Mikrocomputers 22 ist mit einem Regler 21 verbunden, der über ein Stellglied 25 den Motorstrom für den Motor 26 vorgibt.

Im folgenden wird die Funktionsweise des ersten Ausführungsbeispiels beschrieben.

Beim Einspannen eines Werkzeugs, beispielsweise eines Bohrers in die Spannvorrichtung 8 werden die Spannbacken 3 gemäß der Figur 1 entlang der kegelförmig angeordneten Führung axial verschoben und drücken damit den Einstellring 7 mit dem fest angeordneten Signalgeber 6 in Richtung des Pfeils a. Der Einstellring 7 wird durch Federkraft gegen die Spannbacken 3 gedrückt, so daß der Signalgeber 6 in Abhängigkeit von der Öffnungsweite d der Spannbacken 3 spielfrei in Richtung a axial verschiebbar ist. Der Signalaufnehmer 5 ändert dadurch in Abhängigkeit von der Öffnungsweite d der Spannbacken 3 seine relative Position zum Signalgeber 6. Sein Abstand zu den Segmenten 9 bleibt jedoch konstant.

Beim Umlaufen des Signalgebers 6 überfährt der Signalaufnehmer 5 in Abhängigkeit von seiner relativen Position unterschiedliche Bereiche der Segmente 9. Die Segmente 9 weisen Bereiche mit unterschiedlichen Eigenschaften auf, die von dem Signalaufnehmer 5 unterscheidbar und erkennbar sind. So können sich beispielsweise die einzelnen Bereiche durch ihre magnetischen und optischen Eigenschaften oder auch durch ihre Oberflächen unterscheiden. Aufgrund der unterschiedlichen Eigenschaften wird entsprechend der Figuren 2, 3 im Signalaufnehmer 5 eine Impulsfolge 11 generiert, bei der die Periodendauer T ein Maß für die Drehzahl der Welle und das Tastverhältnis aus Impulsdauer $I_D$ und Periodendauer T ein Maß für die Öffnungsweite d der Spannbacken 3 ist.

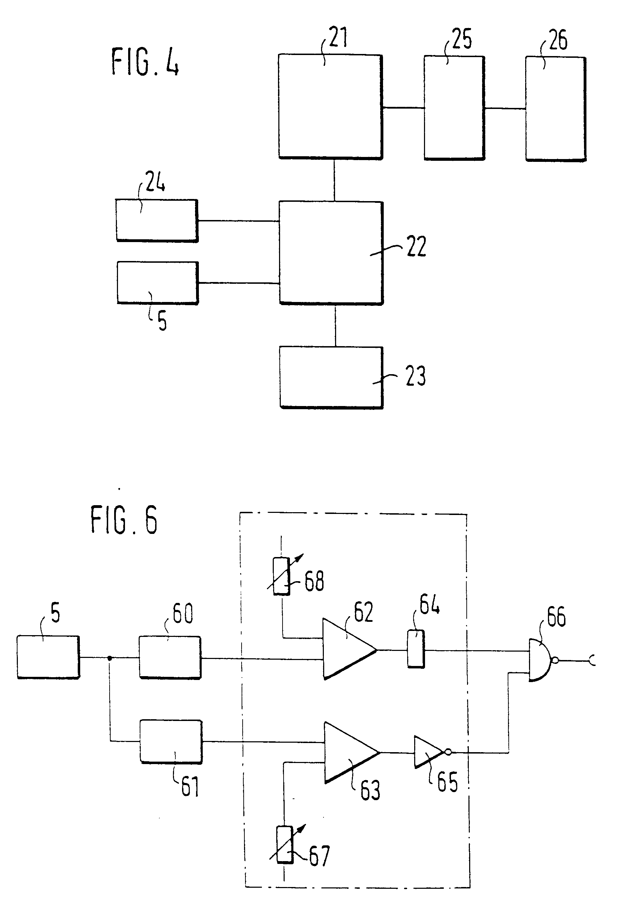

Desweiteren wird aus der Pulsfolge 11 des Signalaufnehmers 5 (Figur 3) durch Messung der Impulse $I_D$ und $P_D$ die Drehrichtung der Einspannvorrichtung ermittelt (Figur 6).

Zur Erfassung der Öffnungsweite der Spannbacken 3 befindet sich im Speicher 23 eine Referenztabelle, aus der der Mikrocomputer 22 entsprechend dem Pulsverhältnis I/T oder I/(I+P) eine Drehzahlanweisung ermittelt und an den Regler 21 gibt. Die Drehzahlanweisung dient als Sollwertvorgabe zur Einstellung der von der Öffnungsweite der Spannbacken abhängigen Motordrehzahl. Dabei werden weitere Parameter, die in der Parametereingabe 24, beispielsweise bezüglich des Materials oder der Getriebegangstellung vorgegeben werden, berücksichtigt. Aufgrund des vorgegebenen Sollwertes für die Drehzahl wird über den Ausgang des Reglers 21 ein Stellglied 25 gesteuert, das den Strom für den Motor 26 steuert. Der Regler 21 ist ein bekannter Regler für die Drehzahleinstellung eines Motors, wie er beispielsweise als elektronischer Schaltkreis TDA 1085A von Motorola hergestellt wird.

Als Stellglied 25 ist ein Halbleiterschalter verwendbar, der als Leistungstransistor oder Triac ausgebildet ist. Desweiteren sind Mikrocomputer zum Steuern und Regeln von Motoren beispielsweise aus dem Informationsblatt der Motorala GmbH, Geschäftsbereich Halbleiter, bekannt (Kompaß, Nr. 2, August 1980).

Als Parametereingabe können Tastenschalter oder Drehsteller verwendet werden, die dem Fachmann bekannt sind und nicht weiter im Detail beschrieben werden müssen.

Der Signalaufnehmer 5 kann auf magnetische oder induktive Änderungen des Signalgebers 6 reagieren. In diesem Fall bestehen die Segmente 9 des Signalgebers 6 aus nebeneinander angeordneten Magneten mit alternierender Polarität.

In weiterer Ausgestaltung der Erfindung ist vorgesehen, einen optoelektronischen Signalaufnehmer 5 zu verwenden, der beispielsweise aus einer Reflexlichtschranke aufgebaut ist. In diesem Fall weisen die Segmente 9 Bereiche mit unterschiedlichen Farbsegmenten auf, die im Signalaufnehmer 5 entsprechende Impulse generieren.

Desweiteren ist vorgesehen, den Signalaufnehmer an einer geschützten Stelle des Gehäuses anzuordnen und die Abtastung der unterschiedlichen Markierungen über Lichtleiter durchzuführen, die mit dem Signalaufnehmer 5 verbunden sind.

Zur Erfassung der Drehrichtung mit dem gleichen Signalaufnehmer 5 ist vorgesehen, die Anordnung der Segmente 9 des Signalgebers 6 unsymmetrisch auszuführen (Figur 2, 3). In diesem Fall werden die Segmente 9 derart ausgebildet, daß der Signalaufnehmer 5 eine Pulsfolge erkennt, bei der die Periodendauer T mindestens eines Impulses ($I_D$ + $P_D$) vergrößert ist und dadurch die Pulsweite $I_D$ und Pausenweite $P_D$ gegenüber den restlichen Impulsen entsprechend verlängert sind. Selbstverständlich ist es auch möglich, die Impulse ($I_D + P_D$) gegenüber den anderen Impulsen zu verringern. Die Auswertung der Drehrichtung erfolgt dadurch, daß bei einer Rechtsdrehung der Spannvorrichtung 8 zunächst die verlängerte Pulsweite $I_D$ und danach die verlängerte Pausenweite $P_D$ erscheint. Bei einer Linksdrehung der Spannvorrichtung 8 wird erst die verlängerte Pausenweite $P_D$ erfaßt und danach die verlängerte Pulsweite $I_D$. Gemäß Figur 6 werden die Pausen- und Pulsweiten beispielsweise in Meßeinrichtungen 60, 61 analog über bekannte Intergratoren oder digital über Zähleinrichtungen ermittelt. Die Auswertung der Pulsfolge erfolgt dann über per se bekannte Komperatoren 62, 63, die einen vorgegebenen Impuls- bzw. Pausenweitenwert als Vergleichswert gespeichert haben.

Es ist vorteilhaft, wenn die vorgegebenen Impuls- bzw. Pausenwerte drehzahlabhängig gesteuert sind, was über einen drehzahlabhängigen Tachogenerator, der nicht dargestellt ist, leicht durchführbar ist.

Am Ausgang der Komperatoren 62, 63 werden dann nur die Signale erkannt, die länger sind, als die Impulse der normalen Segmente 9. Die Impulse der normalen Segmente 9 werden also unterdrückt.

Die Drehrichtungsauswertung erfolgt in einer Logikschaltung, die zwei Zwischenspeicher 64, 65 für die verlängerten Pulse $I_D$ bzw. Pause $P_D$ aufweist. Die Ausgänge der Zwischenspeicher 64, 65 sind auf die Eingänge eines NAND-Gatters 66 geführt.

Der Ausgang 69 weist dann bei Linkslauf eine logische "1" und bei Rechtslauf eine logische "0" auf. Diese Signale werden zur Ansteuerung einer entsprechenden Anzeige verwendet oder in dem Regler 21 weiter verarbeitet.

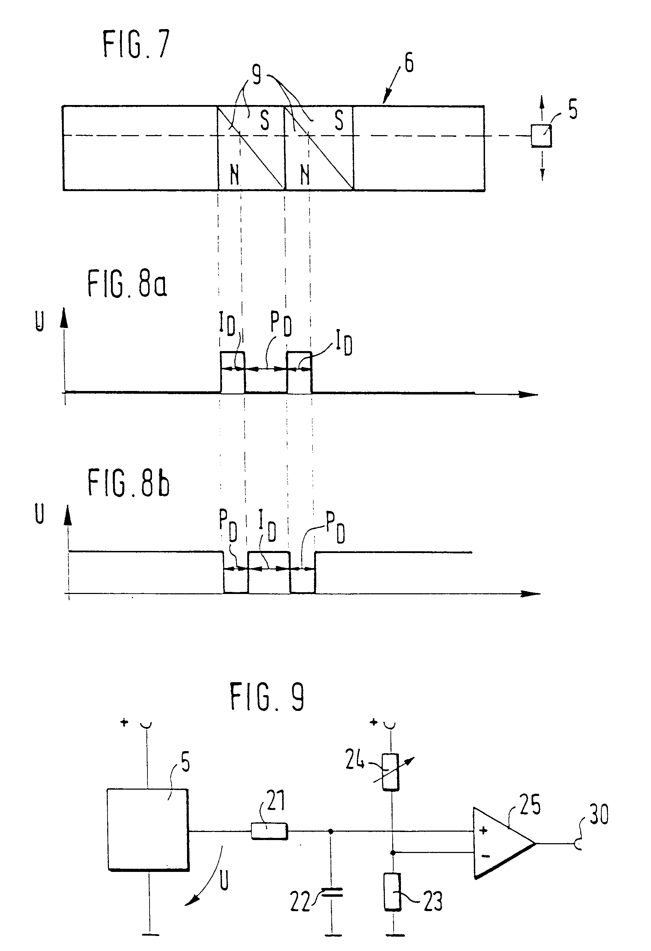

Ein zweites Ausführungsbeispiel zur Bestimmung der Drehrichtung ist in den Figuren 7 bis 9 dargestellt. Figur 7 zeigt die Abwicklung des Signalgebers 6, bei dem - ähnlich wie im ersten Ausführungsbeispiel - dreieckförmige Segmente 9 angeordnet sind. In diesem Ausführungsbeispiel sind Jedoch lediglich zwei Segmentpaare 9 angeordnet, die entgegengesetzte Magnetpole aufweisen. Der restliche Teil des Umfangs des Signalgebers 6 verhält sich bezüglich der magnetischen Eigenschaften neutral, so daß dieser Teil des Signalgebers 6 keinen Einfluß auf die Auswerteschaltung, die in Figur 9 dargestellt ist, ausübt. Die Anordnung des Signalaufnehmers 5 seitlich am Umfang des Signalgebers 6 ist so, wie bereits im ersten Ausführungsbeispiel beschrieben wurde.

Aufgrund dieser Anordnung der Segmente 9 ergibt sich bei jeder Umdrehung des Signalgebers 6 eine Impulsfolge. Die vom Signalaufnehmer 5 gemessene Impulsfolge ist in Figur 8a für Linkslauf und in Figur 8b für Rechtslauf dargestellt. Daraus ist ersichtlich, daß bei Rechtslauf im Mittel eine hohe Spannung und beim Linkslauf eine niedrige Spannung am Ausgang des verwendeten Hallsensors vom Typ UGN-3130 liegt.

Dieser richtungsabhängige Spannungsunterschied wird in der Schaltung der Figur 9 wie folgt ausgewertet. Die Ausgangsspannung des Signalaufnehmers 5 wird über ein RC-Glied 21, 22 intergriert und dem nichtinvertierenden Eingang eines Komparators 25 zugeführt. Der invertierende Eingang ist zur Vorgabe einer Schaltschwelle mit dem Mittenabgriff eines einstellbaren Spannungssteilers 23,24 verbunden. Am Ausgang 30 des Komparators 25 entsteht dann entsprechend der Drehrichtung ein '1'- oder '0'-Signal, das weiter verarbeitbar ist.

Dabei wird die Schaltschwelle für den Komparator so eingestellt, daß sein Schaltwert zwischen den integrierten Werten für Rechtslauf und für Linkslauf liegt. Diese Signale stehen so lange an, bis sich die Drehrichtung des Signalgebers 6 ändert.

Die Funktionsweise dieser sehr einfachen Schaltungsanordnung zur Drehrichtungsauswertung beruht darauf, daß ein Teil des Umfangs des Signalgebers 6 sich neutral verhält und der Hallsensor seinen Schaltzustand beibehält, bis ein Magnetfeldwechsel vorliegt. Da der verwendete Magnetfeldsensor in Abhängigkeit von der Polarität des Magnetfeldes ein '1'- bzw. ein '0'-Signal abgibt, ist sowohl aus dem Signalpegel als auch aus der Flankenrichtung 12, 13 des Signals die Drehrichtung der Spannvorrichtung 8 erfaßbar. Selbstverständlich können statt zwei Segmentpaare 9 auch vier, sechs, usw. verwendet werden, solange noch ein Teil des Umfangs des Signalgebers 6 neutral bleibt. Bei einer Mehrfachanordnung erhöht sich vorteilhaft die Regeldynamik der Schaltungsanordnung.

Die Auswertung der weiteren Parameter 'Drehzahl' bzw. 'Öffnungsweite der Spannbacken' erfolgt aus der Periodendauer bzw. dem Tastverhältnis in der gleichen Weise, wie es im ersten Ausführungsbeispiel bereits beschrieben wurde. Gemäß den Figuren 7, 8a, 8b wird die Drehzahl aus den Impulsen $I_D + P_D$ und die Öffnungsweite aus dem Verhältnis $I_D/(I_D + P_D)$ ermittelt.

Da beim schlagbohrbetrieb des Elektrowerkzeuges eine axiale Bewegung der Spannvorrichtung vorhanden ist, ergibt sich entlang der schrägen Seiten der Segmente 9 einen Jitter-Effekt, der das Meßergebnis verfälschen könnte. Es ist daher vorgesehen, die Anordnung der Segmente gemäß Figur 5 auf die Schlageinrichtung abzustimmen. Die Anordnung der Segmente 9 ist derart gewählt, daß am Signalaufnehmer 5 jeweils dann gemessen wird, wenn die Spannvorrichtung in bezug auf die Längsachse an einer definierten Stelle, beispielsweise an der tiefsten oder höchsten Stelle steht. Der Jitter-Effekt tritt dann im Meßergebnis nicht mehr in Erscheinung.

In weiterer Ausgestaltung der Erfindung ist vorgesehen, den Jitter-Effekt dadurch zu unterdrücken, daß im Schlagbohrbetrieb die Drehzahlinformation durch Auswertung der Segmentseiten b erfolgt. Da die Segmentseite b parallel zur Rotationsachse der Spannvorrichtung 8 liegt, tritt kein JitterEffekt auf. Die Auswertung erfolgt durch eine einfache Richtungsauswertung der Impulsflanken, wie sie beispielsweise durch Differentation der Impulsfolge 11 durchführbar ist. Dadurch entstehen positive und negative Nadelimpulse, die durch Dioden entkoppelbar sind. Aus dem Abstand der entkoppelten positiven bzw. negativen Nadelimpulse ergibt sich die Drehzahl. Bei der Auswertung der entkoppelten positiven bzw. negativen Nadelinpulse ist darauf zu achten, daß nur die zu den Segmentseiten b zugeordneten Nadelinpulse bewertet werden. Denn diese können je nach Drehrichtung positiv oder negativ sein.

Eine weitere vorteilhafte Ausführung zur Unterdrückung des Jitter-Effektes besteht darin, daß unmittelbar nach dem Einschalten des Elektromotors und dem Hochlaufen der Spannvorrichtung auf die Solldrehzahl die Öffnungsweite der Spannbacken 3 gemessen wird, bevor der Schlagbohrbetrieb einsetzt. Das Meßergebnis wird abgespeichert und entsprechend weiterverarbeitet, wie zuvor beschrieben. In diesem Fall entsteht noch kein Jitter-Effekt, da überlicherweise der Bediener des Elektrowerkzeugs mit dem Beginn des Schlagbohrens so lange wartet, bis die Maschine auf die Solldrehzahl hochgelaufen ist. Durch die sofortige Messung nach dem Einschalten des Elektromotors ergibt sich eine vorteilhafte Möglichkeit, Störungseinflüsse ohne großen Aufwand auszuschalten.

**Patentansprüche**

1. Spannvorrichtung für eine elektrische Werkzeugmaschine, insbesondere für ein Elektrohandwerkzeug, mit einer Regelvorrichtung zur Steuerung des Antriebs, mit einem um die Rotationsachse der Spannvorrichtung ringförmig angeordneten Signalgeber (6), der mit den Spannbacken (3) der Spannvorrichtung in Verbindung steht und in Abhängigkeit von deren Öffnungsweite axial verschiebbar ist und der Segmente (9) mit abwechselnd unterschiedlichen Eigenschaften aufweist, und mit einem mit dem Gehäuse (4) der Werkzeugmaschine verbundenen, feststehenden Signalaufnehmer (5), der die Informationen des Signalgebers bezüglich der Drehzahl und der Öffnungsweite der Spannbacken empfängt, dadurch gekennzeichnet, daß der Signalaufnehmer (5) radial zu dem Signalgeber (6) an dessen Umfang angeordnet ist, daß die Segmente derart ausgebildet sind, daß eine Grenze (c) zwischen zwei benachbarten Segmenten (9) nicht parallel zur Rotationsachse verläuft und daß der Abstand (e) zwischen den Segmenten (9) des Signalgebers (6) und dem Signalaufnehmer (5) unabhängig von der Öffnungsweite (d) der Spannbacken (3) in etwa konstant ist.

2. Spannvorrichtung nach Anspruch 1, dadurch gekennzeichnet, daß die Segmente (9) an einem Teil des Umfangs des Signalgebers (6) angeordnet sind.

3. Spannvorrichtung nach einem der vorhergehenden anspruch, dadurch gekennzeichnet, daß der Signalgeber (6) zur Ermittlung der Drehrichtung der Spannvorrichtung (8) verwendbar ist.

4. Spannvorrichtung nach einem der vorhergehenden Ansprüche, dadurch gekennzeichnet, daß der wirksame Teil der Segmente (9) dreieck und/oder trapezförmig ausgebildet ist.

5. Spannvorrichtung nach Anspruch 4, dadurch gekennzeichnet, daß eine Seitenkante (b) der dreieckund/oder trapezförmigen Segmente (9) parallel zur Rotationsachse der Spannvorrichtung (8) angeordnet ist.

6. Spannvorrichtung nach einem der vorhergehenden Ansprüche, dadurch gekennzeichnet, daß die Segmente (9) induktive oder magnetische Eigenschaften aufweisen und daß der Signalaufnehmer (5) auf induktive oder magnetische Änderungen anspricht.

7. Spannvorrichtung nach einem der Ansprüche 1 - 6, dadurch gekennzeichnet, daß die Segmente (9) optische Markierungen aufweisen und daß der Signalaufnehmer (5) auf unterschiedliche optische Markierungen anspricht.

8. Spannvorrichtung nach Anspruch 7, dadurch gekennzeichnet, daß der Signalaufnehmer (5) eine Reflexlichtschranke aufweist.

9. Spannvorrichtung nach Anspruch 7 oder 8, dadurch gekennzeichnet, daß der Signalaufnehmer (5) im Bereich des Gehäuses (4) angeordnet ist und die Informationen des Signalgebers (6) über Lichtleiter empfängt.

10. Spannvorrichtung nach einem der vorhergehenden Ansprüche, dadurch gekennzeichnet, daß die Spannvorrichtung für ein Elektrowerkzeug mit einer Schlagbohreinrichtung verwendbar ist und daß die zur Rotationachse schräg verlaufende Seite (c) der Segmente (9) auf das Maximum oder Minimum der Zahnung einer Rastenscheibe der Schlagbohreinrichtung ausgerichtet ist.

11. Spannvorrichtung nach einem der vorhergehenden Ansprüche, dadurch gekennzeichnet, daß die Öffnungsweite (d) der Spannbacken (3) unmittelbar vor dem Einsetzen des Schlagebtriebes der Werkzeugmaschine ermittelt und deren Wert abgespeichert wird.

## Claims

1. Clamping device for an electric machine tool, in particular for an electric hand tool, having a control device for controlling the drive, a transducing sensor (6), which is arranged in an annular fashion around the axis of rotation of the clamping device, is connected to the jaws (3) of the clamping device, can be axially displaced as a function of the opening of said jaws and which has segments (9) with alternately different properties, and having a fixed signal detector (5), which is connected to the housing (4) of the machine tool and receives the items of information from the transducing sensor with respect to the speed and the opening of the jaws, characterized in that the signal detector (5) is arranged radially relative to the transducing sensor (6) on the circumference thereof, in that the segments are constructed in such a way that a boundary (c) extends between two adjacent segments (9) in a fashion not parallel to the axis of rotation, and in that the distance (e) between the segments (9) of the transducing sensor (6) and the signal detector (5) is approximately constant irrespective of the opening (d) of the jaws (3).

2. Clamping device according to Claim 1, characterized in that the segments (9) are arranged on one part of the circumference of the transducing sensor (6).

3. Clamping device according to one of the preceding claims, characterized in that the transducing sensor (6) can be used to determine the sense of rotation of the clamping device (8).

4. Clamping device according to one of the preceding claims, characterized in that the effective part of the segments (9) is constructed in a triangular and/or trapezoidal fashion.

5. Clamping device according to Claim 4, characterized in that one side edge (b) of the triangular and/or trapezoidal segments (9) is arranged parallel to the axis of rotation of the clamping device (8).

6. Clamping device according to one of the preceding claims, characterized in that the segments (9) have inductive or magnetic properties, and in that the signal detector (5) responds to inductive or magnetic changes.

7. Clamping device according to one of Claims 1-6, characterized in that the segments (9) have optical markings, and in that the signal detector (5) responds to different optical markings.

8. Clamping device according to Claim 7, characterized in that the signal detector (5) has a reflection light barrier.

9. Clamping device according to Claim 7 or 8, characterized in that the signal detector (5) is arranged in the region of the housing (4) and receives the items of information from the transducing sensor (6) via light pipes.

10. Clamping device according to one of the preceding claims, characterized in that the clamping device can be used for an electric tool having a hammer device, and in that the side (c) of the segments (9) which extends obliquely relative to the axis of rotation is aligned on the maximum or minimum of the tooth system of a notched disc of the hammer device.

11. Clamping device according to one of the preceding claims, characterized in that the opening (d) of the jaws (3) is determined immediately before the inception of the hammer mode of the machine tool and the value thereof is stored.

## Revendications

1. Dispositif de serrage pour une machine-outil électrique, notamment pour une machine électroportative, comportant un dispositif de régulation pour commander le moteur avec un générateur de signal (6), annulaire entourant l'axe de rotation du dispositif de serrage, relié aux mors, au droit du dispositif de serrage et peut coulisser axialement en fonction de son degré d'ouverture et possède des segments à propriétés différentes, alternants, ainsi qu'un récepteur de signal (5), fixe, relié au boîtier (4) de la machine, qui reçoit les informations du générateur de signal concernant la vitesse de rotation et le degré d'ouverture des mors, dispositif caractérisé en ce que le récepteur de signal (5) est prévu à la périphérie, radialement par rapport au générateur de signal (6), les segments étant conçus pour qu'une frontière (c) entre deux segments voisins (9) ne soit pas parallèle à l'axe de rotation et que la distance (e) entre les segments (9) du générateur de signal (6) et du récepteur de signal (5) soit sensiblement constante, indépendamment du degré d'ouverture (d) des mors (3).

2. Dispositif de serrage selon la revendication 1, caractérisé en ce que les segments (9) sont prévus sur une partie de la périphérie du générateur de signal (6).

3. Dispositif de serrage selon l'une des revendications précédentes, caractérisé en ce que le générateur de signal (6) est utilisable pour déterminer le sens de rotation du dispositif de serrage (8).

4. Dispositif de serrage selon l'une des revendications précédentes, caractérisé en ce que la partie active des segments (9) est de forme triangulaire et/ou trapézoïdale.

5. Dispositif de serrage selon la revendication 4, caractérisé en ce qu'un bord latéral (b) des segments triangulaires et/ou trapézoïdaux (9) est parallèle à l'axe de rotation du dispositif de serrage (8).

6. Dispositif de serrage selon l'une des revendications précédentes, caractérisé en ce que les segments (9) ont des propriétés inductives ou magnétiques et le récepteur de signal (5) est sensible à des variations de propriétés inductives ou magnétiques.

7. Dispositif de serrage selon l'une des revendications 1-6, caractérisé en ce que les segments (9) comportent des repères optiques et le récepteur de signal (5) répond à des repères optiques différents.

8. Dispositif de serrage selon la revendication 7, caractérisé en ce que le récepteur de signal (5) possède une barrière lumineuse à réflexion.

9. Dispositif de serrage selon la revendication 7 ou 8, caractérisé en ce que le récepteur de signal (5) est prévu au niveau du boîtier (4) et reçoit les informations du générateur de signal (6) par des guides de lumière.

10. Dispositif de serrage selon l'une des revendications précédentes, caractérisé en ce que le dispositif de serrage est applicable à un outil électrique d'une installation de percussion et le côté (c) des segments (9) inclinés par rapport à l'axe de rotation est aligné vers le maximum ou le minimum des dents d'un disque à encoches de l'installation de percussion.

11. Dispositif de serrage selon l'une des revendications précédentes, caractérisé en ce que le degré d'ouverture (d) des mors (3) est déterminé directement avant la mise en marche du mode de percussion de la machine-outil et sa valeur est enregistrée en mémoire.

# FIG. 1

FIG. 2

FIG. 3

FIG. 5

FIG. 4

FIG. 6

FIG.7

FIG.8a

FIG.8b

FIG. 9